# EUROPEAN PATENT SPECIFICATION

(11) **EP 2 682 930 B1**
(45) Date of publication and mention of the grant of the patent: **09.11.2016**
(21) Application number: 12755569.6
(22) Date of filing: 27.02.2012
(51) Int. Cl.: G01S 11/14, G08G 1/16, B60R 21/0134

(54) **APPROACHING VEHICLE DETECTION DEVICE**
VORRICHTUNG ZUR ERKENNUNG SICH NÄHERNDER FAHRZEUGE
DISPOSITIF DE DÉTECTION DE VÉHICULE EN APPROCHE

(30) Priority: 04.03.2011 JP 2011047557
(43) Date of publication of application: 08.01.2014
(73) Proprietor: TOYOTA JIDOSHA KABUSHIKI KAISHA, Toyota-shi, Aichi-ken, 471-8571 (JP)
(72) Inventor: SATO Jun, Toyota-shi Aichi 471-8571 (JP); FUNAYAMA Ryuji, Toyota-shi Aichi 471-8571 (JP); TAKAHASHI Norihiro, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/054817
(87) International publication number: WO 2012/121048

(56) References cited:
- WO-A1-2011/001684
- GB-A- 2 350 425
- JP-A- 2005 255 091
- JP-A- 2007 079 862
- JP-A- 2010 165 087
- JP-A- 2010 234 851
- JP-A- 2010 257 217

## Description

### Technical Field

The present invention relates to an approaching vehicle detection device that detects an approaching vehicle based on a running noise.

### Background Art

An approaching vehicle detection device collects ambient sounds using each of a plurality of sound collectors and specifies the moving direction of a sound source (particularly, a vehicle) based on the arrival time difference of each sound. The device disclosed in Japanese Unexamined Utility Model Registration Application Publication No. 5-92767, JP 5-92767 U, converts an electric signal output from a plurality of microphones disposed in a predetermined intervals into a correction electric signal by removing a frequency component of a low frequency band and high frequency band respectively using a band pass filter, calculates a power of a predetermined frequency band which expresses the characteristics of the running noise of the vehicle from the correction electric signal, and determines that the approaching vehicle is present in a case where the power level is larger than a predetermined value. Further, the device disclosed in JP 5-92767 U converts the correction electric signal into a noise suppression signal by removing an unnecessary noise component, calculates a mutual correlation between noise suppression signals of the plurality of the microphones, and calculates an approaching direction of the approaching vehicle from the arrival time difference in which the correlation is a maximum. In a case where the approaching vehicle is detected in this way, various driving support using the information of the approaching vehicle is performed. For example, an alarm output to a driver is performed when it is determined that there is a possibility of collision of the host vehicle and the approaching vehicle based on the information of the approaching vehicle.
Japanese Unexamined Patent Application Publication No. 8-202999 and Japanese Unexamined Patent Application Publication No. 9-128697 also disclose background art for the present invention.
GB 2 350 425 A discloses a detection unit detecting an approaching vehicle based on its running noise. The weather, and in particular air density indicating fog are detected. The thus gathered visibility information is used to adjust a sound detection system.

### Summary of Invention

### Technical Problem

In a case where a detection of an approaching vehicle is operated at all times based on a running noise of a vehicle, the detection of the approaching vehicle is performed even in a situation where the surrounding status is visible enough for the driver (or a situation which can be detected sufficiently by the camera sensor system). Therefore, despite the driver being aware of the approaching vehicle, the approaching vehicle is detected based on the running noise and then, the alarm output, it would be better if the approaching vehicle detection is not operated.

Therefore, an object of the present invention is to provide an approaching vehicle detection device that operates an approaching vehicle detection only in an appropriate situation based on the running noise.

### Solution to Problem

An approaching vehicle detection device according to the present invention includes; an approaching vehicle detection unit installed in a vehicle that detects an approaching vehicle based on a running noise, an acquisition unit that acquires visibility information which indicates a visibility around the vehicle, and a determination unit that determines whether or not to cause the approaching vehicle detection unit to operate based on the visibility information acquired by the acquisition unit.

In the approaching vehicle detection device, the visibility information that indicates the visibility around the vehicle is acquired by the acquisition unit. In a case where the visibility around the vehicle is high, the driver can visually check for the neighboring vehicle. However, in a case where the visibility around the vehicle is low, it is difficult for the driver to visually check the neighboring vehicle. Therefore, in the approaching vehicle detection device, the determination unit determines whether or not to cause the approaching vehicle detection unit to operate based on the visibility information, and causes the approaching vehicle detection unit to operate only when the visibility around the vehicle is getting worse, and the approaching vehicle is detected based on the running noise. In this manner, by determining whether or not to cause the approaching vehicle detection unit to operate based on the visibility information indicating the visibility around the vehicle, the approaching vehicle detection device can cause the approaching vehicle detection unit to operate only in the situation where the visibility around the vehicle is getting worse (the situation where the approaching vehicle detection based on the running noise is needed). As a result, when such a neighboring situation can be checked by the view of the driver, it is possible to suppress the unnecessary alarm output by an operation of the approaching vehicle detection unit and to suppress the inconvenience to the driver. In addition, the number of the operations (operating time) of the approaching vehicle detection unit can be reduced. Therefore, the energy-saving effect also can be obtained.

Here, the acquisition unit may acquire illumination information around the vehicle. In this case, the determination unit may determine whether or not to cause the approaching vehicle detection unit to operate based on a comparison between the illumination information acquired by the acquisition unit and a predetermined threshold value of the illumination. In addition, the acquisition unit may acquire weather information around the vehicle. In this case, the determination unit may determine whether or not to cause the approaching vehicle detection unit to operate based on a comparison between the weather information acquired by the acquisition unit and a predetermined weather conditions.

The approaching vehicle detection device according to the present invention may be configured to further include a detection unit that detects the visibility information which indicates the visibility how much the driver can view and the determination unit determines whether or not to cause the approaching vehicle detection unit to operate based on the visibility information detected by the detection unit.

In the approaching vehicle detection device, the visibility information which indicates the visibility how much the driver can view is acquired by the detection unit. Even in such a situation that the visibility can be determined good based on the visibility information around vehicle, there is a case that it is difficult for the driver to recognize the neighboring situation due to the road structure or an obstacle such as a building. In such a case, the driver tries to check the situation as much as possible by often moving his/her eyes to right and left sides or by changing his/her posture. Therefore, in the approaching vehicle detection device, the determination unit determines whether or not to cause the approaching vehicle detection unit to operate based on the visibility information indicating how much the driver can view, and causes the approaching vehicle detection unit to operate only when the visibility how much the driver can view is getting worse, and the approaching vehicle is detected based on the running noise. In this manner, by determining whether or not to cause the approaching vehicle detection unit to operate based on the visibility information indicating the visibility how much the driver can view, the approaching vehicle detection device can cause the approaching vehicle detection unit to operate only in the situation where the visibility how much the driver can view is getting worse (the situation where the approaching vehicle detection based on the running noise is needed).

Here, the detection unit may detect the driver's line of sight information. In this case, the determination unit may determine whether or not to cause the approaching vehicle detection unit to operate based on a comparison between the line of sight information acquired by the detection unit and a predetermined moving status of the line of sight. In addition, the detection unit may detect the driver's posture information. In this case, the determination unit may determine whether or not to cause the approaching vehicle detection unit to operate based on a comparison between the posture information acquired by the detection unit and a predetermined frontward inclination status of the posture.

The determination unit may be configured in the approaching vehicle detection device or configured in a device other than the approaching vehicle detection device.

### Advantageous Effects of Invention

According to the present invention, it is possible to operate the approaching vehicle detection only in the situation where the visibility is getting worse (the situation where the approaching vehicle detection based on the running noise is needed).

### Brief Description of Drawings

Fig. 1 is a configuration diagram of an approaching vehicle detection device according to the first embodiment.
Fig. 2 is a flow chart that illustrates a flow of an operation determination processing in an ECU of the approaching vehicle detection device according to the first embodiment.
Fig. 3 is a configuration diagram of an approaching vehicle detection device according to the second embodiment.
Fig. 4 is a flow chart that illustrates a flow of an operation determination processing in an ECU of the approaching vehicle detection device according to the second embodiment.

### Description of Embodiments

Hereafter, the embodiments of an approaching vehicle detection device in the present invention will be described with reference to the drawings. In the drawings, like elements or corresponding elements are referenced by like reference numerals, and duplicated descriptions will not be repeated.

In the present embodiment, the present invention is applied to an approaching vehicle detection device which is mounted on a vehicle. The approaching vehicle detection device according to the present embodiment detects a vehicle approaching to a host vehicle based on a running noise of the vehicle (that is, specifies a moving direction of a sound source of the running noise of neighboring vehicles), and provides the approaching vehicle information to a driving support device. In particular, the approaching vehicle detection device according to the present embodiment does not operate the approaching vehicle detection at all times but operates the approaching vehicle detection only when an operation determination unit configured in the device determines that the operation is needed. There are two embodiments in the present embodiment, in the first embodiment, the operation is determined based on illumination information and weather information, in the second embodiment, in addition to the determination in the first embodiment, the operation is determined based on line of sight information and posture information of the driver.

In addition, the running noise of the vehicle is mainly a road noise (a frictional noise between a tire surface and a road surface) and a pattern noise (a vortex of air in the grooves of the tire (compression / open)). A frequency component range of the running noise of the vehicle may be determined in advance by experiment or the like.

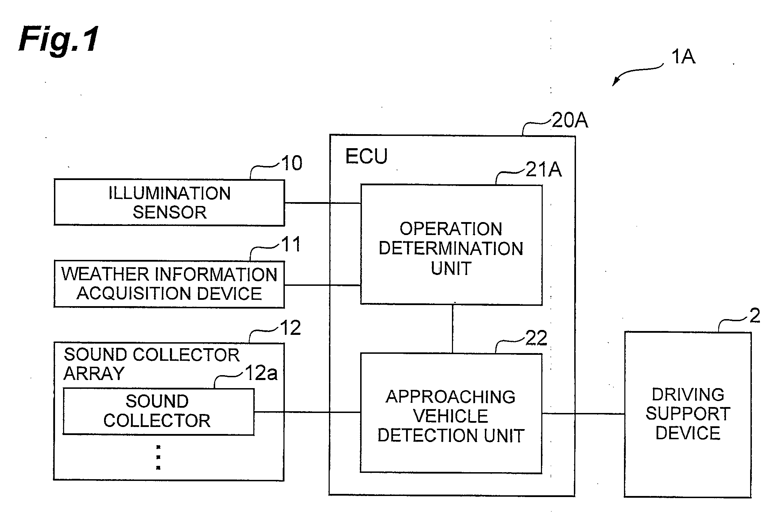

The approaching vehicle detection device 1A in the first embodiment will be described with reference to Fig. 1. Fig.1 is a configuration diagram of the approaching vehicle detection device in the first embodiment.

The approaching vehicle detection device 1A includes an illumination sensor 10, a weather information acquisition device 11, a sound collector array 12 (sound collector 12a, ...), and an ECU [Electronic Control Unit] 20A (an operation determination unit 21 A and an approaching vehicle detection unit 22). In the approaching vehicle detection device 1A, the operation determination unit 21A in the ECU 20A operates at all times, and the approaching vehicle detection unit 22 operates only when the operation determination unit 21A determines the situation is that the visibility is getting worse based on the illumination information and the weather information. Furthermore, in the first embodiment, the illumination sensor 10 is corresponding to an acquisition unit disclosed in Claims and the operation determination unit 21A is corresponding to a determination unit disclosed in Claims.

The illumination sensor 10 is a sensor that detects an illumination outside the vehicle. The illumination sensor 10 detects the illumination around the host vehicle at regular time intervals, and transmits the detected illumination information to the ECU 20A.

The weather information acquisition device 11 is a device that acquires weather information around the host vehicle. As the examples of the weather information acquisition device 11 may include; a device that acquires information of a wiper's ON / OFF state and an operation interval of the wiper when the wiper is in ON state, a device that acquires an atmospheric pressure around the vehicle, a device capable of receiving the information distributed through the internet (particularly, the weather information), and a device capable of receiving the infrastructure information distributed from the road side (particularly, the weather information). The weather information acquisition device 11 transmits the acquired weather information to the ECU 20A when the weather information is acquired.

The sound collector array 12 includes two or more sound collectors 12a. The two or more sound collectors 12a are disposed on the front end of the vehicle in a line in a vehicle width direction (a lateral direction). The sound collector 12a is an acousto-electric convertor, collects the neighboring sounds outside the vehicle, converts the collected sounds to electric signal, and transmits the electric signal to the ECU 20A.

The ECU 20A is an electronic control unit formed of a CPU [Central Processing Unit], a ROM [Read Only Memory] and a RAM [Random Access Memory], and performs overall control of the approaching vehicle detection device 1A. The ECU 20A is configured to include the operation determination unit 21A that operates at all times when the vehicle system is operating and the approaching vehicle detection unit 22 that operates only when the operation is permitted by the operation determination unit 21A. In the ECU 20A, each information from the illumination sensor 10 and the weather information acquisition device 11 are input respectively, and the processing in the operation determination unit 21A is performed using each information at all times at regular time intervals. In addition, in the ECU 20A, each electric signal from each sound collector 12a is input respectively, and the processing in the approaching vehicle detection unit 22 is performed using the electric signal at regular time intervals only when the operation is permitted.

The operation determination unit 21A determines, based on the illumination information, the situation whether or not the visibility is getting worse, for it is dark around the host vehicle and the view (by eyes) of the driver or the detection by the sensor of the camera system is difficult. In this determination, for example, the operation determination unit 21A determines whether the detected illumination is equal to or less than a predetermined threshold value or not. In addition, the operation determination unit 21A determines, based on the weather information, the situation whether or not the visibility is getting worse, for the weather condition is bad and the visibility how much the driver can view or the detection by the sensor of the camera system is difficult. In this determination, for example, the determination is performed by the presence and the amount of rain, snow and fog. Then, in a case where at least one of the determinations shows the situation that the visibility is getting worse, the operation determination unit 21A determines to cause the approaching vehicle detection unit 22 to operate. In a case where both of the determinations show the situation that the visibility is not getting worse, the operation determination unit 21A determines to cause the approaching vehicle detection unit 22 to stop operating. Moreover, besides those conditions, the determination of the situation whether or not the visibility is getting worse may be performed when an angle of the sun light is low.

Incidentally, when it is bright around the vehicle, the surrounding situation can be checked by the view of the driver. However, when it is dark around the host vehicle, it is difficult to check the surrounding situation by the view of the driver. In case of a vehicle in which approaching vehicle detection is also performed by the sensor of the camera system, it is difficult to detect the neighboring vehicle when it is dark around the vehicle depending upon the performance of the sensor of the camera system. In this case, it is necessary to detect the approaching vehicle based on the running noise.

The approaching vehicle detection unit 22 operates only when it is determined to operate by the operation determination unit 21A. The approaching vehicle detection unit 22 calculates an arrival time difference of the sound from the mutual correlations between the electric signal of the two sound collectors 12a and 12a, and determines the presence of the sound source and the approaching direction of the sound source in a case where the sound is present, based on the arrival time difference. On this occasion, only the sound source having a frequency component corresponding to the running noise of the vehicle is extracted as a sound source.

In the ECU 20A, the approaching vehicle information is generated based on the detection result of the approaching vehicle detection unit 22, and the approaching vehicle information is transmitted to the driving support device 2. The example of the approaching vehicle information includes information on the presence or absence of the approaching vehicle, the approaching direction in a case where the approaching vehicle is present, and the relative distance to the host vehicle. Moreover, in a case where the approaching vehicle detection unit 22 is not operating, in the ECU 20A, the approaching vehicle information may not be transmitted to the driving support device 2, or the approaching vehicle information saying the detection process to stop may be transmitted to the driving support device 2.

The driving support device 2 is a device that gives various type of driving supports to the driver. In particular, the driving support device 2 performs the driving supports regarding the approaching vehicle at regular time intervals when the approaching vehicle information is received from the approaching vehicle detection device 1A. For example, in a case where an vehicle approaching to the host vehicle is present, the driving support device 2 determines the possibility of collision of the approaching vehicle and the host vehicle, outputs an alarm to the driver or provides information of the approaching vehicle when it is determined that there is a possibility of a collision, and further performs vehicle control such as an automatic braking when the possibility of collision is increased.

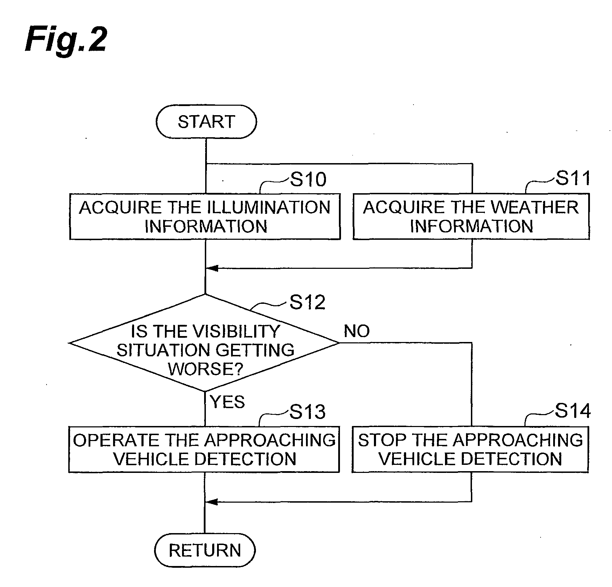

With reference to Fig. 1, the operation of the approaching vehicle detection device 1A will be described. Particularly, the process in the operation determination unit 21A of the ECU 20A will be described with reference to a flow chart in Fig. 2. Fig. 2 is a flow chart that illustrates a flow of the operation determination processing in the ECU of the approaching vehicle detection device according to the first embodiment.

The illumination sensor 10 detects the illumination around the host vehicle and transmits the illumination information to the ECU 20A. The ECU 20A receives the illumination information to acquire the illumination information (S10). The weather information acquisition device 11 acquires the weather information around the host vehicle, and transmits the weather information to the ECU 20A. The ECU 20A receives the weather information to acquire the weather information (S11). Each of the sound collectors 12a collects the surrounding sounds outside the vehicle, converts the collected sounds to the electric signal, and transmits the electric signal to the ECU 20A. The ECU 20A receives and acquires the plurality of electric signals.

At regular time intervals, in the operation determination unit 21A of the ECU 20A, the situation is determined that the visibility is getting worse based on the illumination information, and the situation is determined that the visibility is getting worse based on the weather information (S12). In a case where the situation is determined that the visibility is getting worse by at least one of the determinations in S12, the operation determination unit 21A of the ECU 20A causes the approaching vehicle detection unit 22 to operate (S13). In a case where the approaching vehicle detection unit 22 is already in operating, the operation state is continued. In a case where the situation is determined that the visibility is not getting worse by any one of the determinations in S12, the operation determination unit 21A of the ECU 20A causes the approaching vehicle detection unit 22 to stop operating (S14). In a case where the approaching vehicle detection unit 22 is already in operation stop, the operation stop state is continued. The operation determination unit 21A performs above determinations repeatedly at regular time intervals.

In a case where the approaching vehicle detection unit 22 is in operating, the approaching vehicle detection unit 22 of the ECU 20A calculates the arrival time difference of the sound from the mutual correlations between the electric signal of the sound collectors 12a and 12a, and determines the presence of the sound source (particularly, the vehicle) and the approaching direction of the sound source in a case where the sound is present based on the arrival time difference. The ECU 20A generates the approaching vehicle information based on each of the above described determination results, and transmits the approaching vehicle information to the driving support device 2.

According to the approaching vehicle detection device 1A, it is possible to cause the approaching vehicle detection to be operated only when the situation is determined that the visibility around the vehicle is getting worse (the situation where the approaching vehicle detection based on the running noise is necessary) by determining whether the situation is in that the visibility of the surrounding is getting worse based on the illumination information and the weather information. As a result, when such surrounding situation that can be checked by the view of the driver, it is possible to suppress the unnecessary alarm output by the approaching vehicle detection and to suppress the inconvenience of the driver, without the approaching vehicle detection being operated. In addition, the number of the operations (operating time) of the approaching vehicle detection can be suppressed. Therefore, the energy-saving effect can also be obtained.

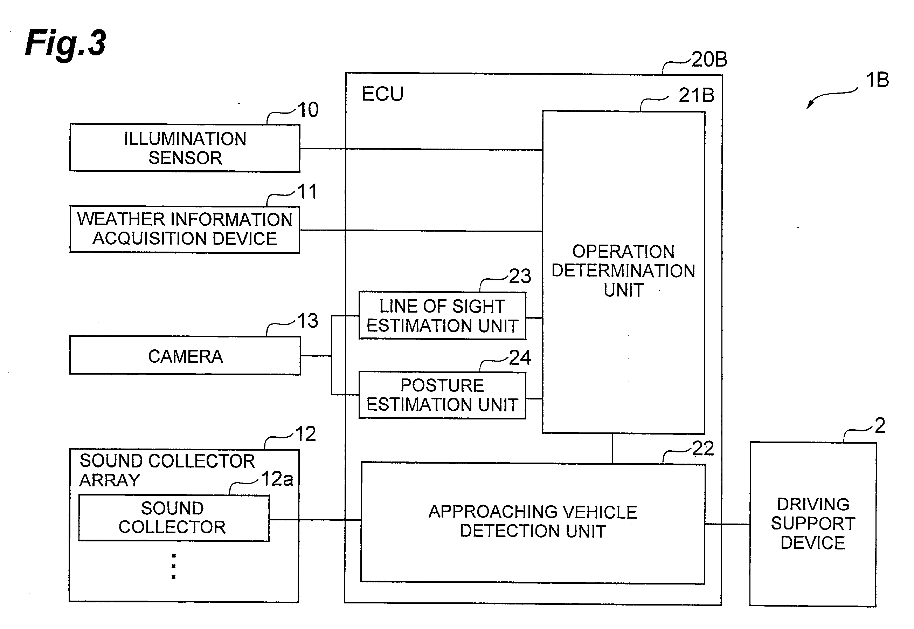

An approaching vehicle detection device 1B in the second embodiment will be described with reference to Fig. 3. Fig. 3 is a configuration diagram of an approaching vehicle detection device according to the second embodiment.

The approaching vehicle detection device 1B includes the illumination sensor 10, the weather information acquisition device 11, the sound collector array 12 (the collectors 12a,...) and an ECU 20B (a line of sight estimation unit 23, a posture estimation unit 24, an operation determination unit 21B and the approaching vehicle detection unit 22). Compared to the approaching vehicle detection device 1A in the first embodiment, a difference of the approaching vehicle detection device 1B is that the operation / stop of the approaching vehicle detection unit 22 is determined by a determination of the situation where the driver's visibility is getting worse based on the driver's line of sight information and the posture information, in addition to the determination of the situation where the visibility is getting worse based on the illumination information and the weather information in the operation determination unit 21B in the ECU 20B. Moreover, in the second embodiment, the line of sight estimation unit 23 and the posture estimation unit 24 of the ECU 20B and the camera 13 are corresponding to the detection unit disclosed in Claims, and the operation determination unit 21B is corresponding to the determination unit disclosed in Claims.

The camera 13 is a camera that captures an image of the driver's upper body. At regular time intervals, the camera 13 captures the image of the driver and transmits the captured image information to the ECU 20B.

The ECU 20B is an electronic control unit formed of the CPU, the ROM, the RAM and the like, and performs overall control of the approaching vehicle detection device 1B. The ECU 20B is configured to include the operation determination unit 21B, the line of sight estimation unit 23, and the posture estimation unit 24 that operate at all time respectively when the vehicle system is operating, and the approaching vehicle detection unit 22 that operates only when it is permitted by the operation determination unit 21B to operate. Various information from the illumination sensor 10, the weather information acquisition device 11 and the camera 13 are input to the ECU 20B respectively, and the ECU 20B performs the process of the operation determination unit 21B using the various information at all time at regular time intervals. In addition, each electric signal from each sound collector 12a is input to the ECU 20B respectively, and only when it is permitted by the operation determination unit 21B to operate, the ECU 20B performs the process of the approaching vehicle detection unit 22 using each electric signal at all times at regular time intervals. In addition, the processing of the approaching vehicle detection unit 22 is described in the first embodiment and will not be repeated.

The line of sight estimation unit 23 extracts the driver's right and left eye regions from the image information, and estimates the direction of the line of sight of the right and left eyes from the right and left eye regions respectively.

The posture estimation unit 24 extracts the driver's upper body region from the image information, and estimates the driver's posture from the upper body region. The example of the driver's posture are the frontward inclination amount from the normal position of the driver's back positioned against the back of the seat, and the forward moving amount compared to the normal position of driver's head.

The operation determination unit 21B determines the situation whether the visibility is getting worse or not based on the illumination information and the weather information as similar to the operation determination unit 21A in the first embodiment. In a case where the situation is determined that the visibility is not getting worse, the operation determination unit 21B determines the situation whether the visibility is getting worse or not (the situation where it is difficult to see for the driver) based on the driver's time series line of sight and posture estimated at regular time intervals. In this determination, for example, the operation determination unit 21B determines whether or not the driver's line of sight is moving right and left frequently, or whether or not the driver is leaning forward. Then, in a case where the situation is determined that the visibility is getting worse, the operation determination unit 21B determines the approaching vehicle detection unit 22 to operate, and in a case where the situation is determined that the visibility is not getting worse, the operation determination unit 21B determines the approaching vehicle detection unit 22 to stop operating.

Incidentally, even in a situation where the visibility is not low based on the environmental factors, there is a case where it is difficult for the driver to recognize the surrounding situation (particularly, the situation of the front direction) due to the road structure such as an intersection, an obstacle by a building, or the like. In such cases, the driver tries to check the situation as much as possible by leaning his/her body forward or by moving his/her eyes right and left frequently.

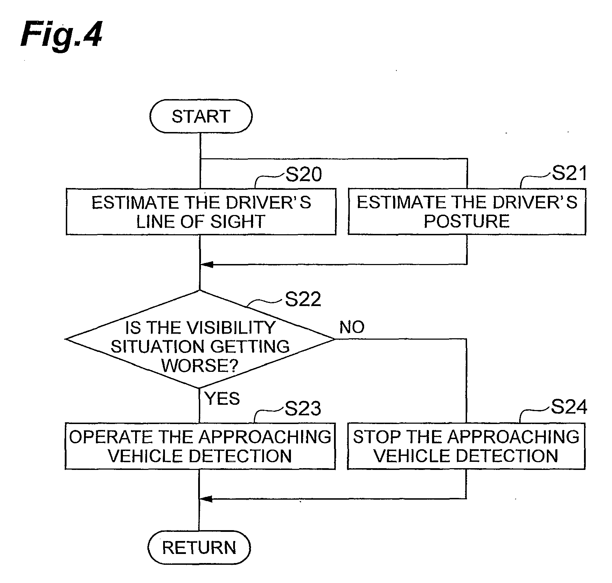

The operation of the approaching vehicle detection device 1B will be described with reference to Fig. 3. In particular, a part of the processing of the operation determination unit 21B in the ECU 20B will be described with reference to the flow chart in Fig. 4. Fig. 4 is a flow chart that illustrates a flow of the operation determination processing in the ECU of the approaching vehicle detection device according to the second embodiment.

The illumination sensor 10 and the weather information acquisition device 11 perform similar operations described in the first embodiment. The camera 13 captures the image of the driver's upper body and transmits the captured image information to the ECU 20B. The ECU 20 B receives and acquires the image information. Each of the sound collectors 12a performs the similar operations described in the first embodiment.

At regular time intervals, the line of sight estimation unit 23 of the ECU 20B estimates the driver's line of sight direction of the right and left eyes based on the image information (S20). In addition, the posture estimation unit 24 of the ECU 20B estimates the driver's posture based on the image information (S21). The line of sight estimation unit 23 and the posture estimation unit 24 perform the above-described estimation repeatedly at regular time intervals.

The operation determination unit 21B of the ECU 20B determines the situation whether the visibility is getting worse based on the illumination information and the weather information, as described in the first embodiment (S12). In a case where the situation is determined that the visibility is getting worse, in the determination in S12, the operation determination unit 21B of the ECU 20B causes the approaching vehicle detection unit 22 to operate (S13).

In a case where the situation is determined that the visibility is not getting worse in S12, the operation determination unit 21B of the ECU 20B determines the situation whether the visibility how much the driver can view is getting worse or not based on the driver's line of sight and posture (S22). In a case where the situation is determined that the visibility how much the driver can view is getting worse in the determination in S22, the operation determination unit 21B of the ECU 20B causes the approaching vehicle detection unit 22 to operate (S23). In a case where the situation is determined that the visibility how much the driver can view is not getting worse in the determination in S22, the operation determination unit 21B of the ECU 20B causes the approaching vehicle detection unit 22 to stop operating (S24). The operation determination unit 21B performs the above-described determination repeatedly at regular time intervals.

In a case where the approaching vehicle detection unit 22 is in operating, the approaching vehicle detection unit 22 of the ECU 20B performs the similar processing described in the first embodiment.

The approaching vehicle detection device 1B also has an effect described below in addition to the similar effect of which the approaching vehicle detection device 1A in the first embodiment has. According to the approaching vehicle detection device 1B, even in a situation where the visibility is not bad in environmental factors, when a situation where the visibility how much the driver can view is getting worse, it is possible to cause the approaching vehicle detection to be operated by determining the situation whether the visibility how much the driver can view is getting worse or not based on the driver's line of sight information or the posture information.

Previously, the embodiments according to the present invention are described. However, the present invention is not limited to the embodiments described above, and may be embodied in various forms.

Furthermore, using the method described above, the present invention can also be similarly applied to a program for operating the approaching vehicle detection only at an appropriate situation based on the running noise, or a computer-readable recording medium which stores the program.

For example, the present embodiments are applied to the approaching vehicle detection device which is mounted on the vehicle and provides the detected approaching vehicle information to the driving support device. However, there may be another configuration as a configuration of the approaching vehicle detection device. For example, the driving support device may be incorporated as an approaching vehicle detection function, or the approaching vehicle detection device may have a configuration to include an alarm function therein.

In addition, in the present embodiments, the ECU of the approaching vehicle detection device has the configuration to include the approaching vehicle detection unit and the operation determination unit and the approaching vehicle detection is determined to operate / stop by the operation determination unit. However, the approaching vehicle detection may be determined to operate / stop by another device (for example, the driving support device) other than the approaching vehicle detection device, and the approaching vehicle detection device is determined to operate / stop by such another device.

In addition, the approaching vehicle detection device in the first embodiment has a configuration in which the situation is determined whether the visibility is getting worse or not based on the illumination information and the weather information, and the approaching vehicle detection is determined to operate / stop. However, the approaching vehicle detection may be determined to operate / stop by the illumination information only.

Furthermore, the approaching vehicle detection device in the second embodiment has a configuration in which the situation is determined whether the visibility is getting worse or not based on the driver's line of sight and posture in addition to the determination in the first embodiment, and the approaching vehicle detection is determined to operate / stop. However, the approaching vehicle detection may be determined to operate / stop by the line of sight and the posture only. In addition, the detection may be determined by any one of the line of sight or the posture.

Furthermore, in a case when the blind spot area such as an intersection where the visibility around the host vehicle is bad is detected and the blind spot area is an area where there is a possibility that the host vehicle travels, the approaching vehicle detection device may be configured so as the approaching vehicle detection to be operated. In addition, in a case where a blinker operation, steering amount of a steering wheel, or a lane change intention and a tendency to depart from the host vehicle position in the traveling path are detected, the approaching vehicle detection device may be configured so as the approaching vehicle detection to be operated.

## Claims

1. An approaching vehicle detection device (1A) installed in a vehicle, comprising:
an approaching vehicle detection unit (22) that detects an approaching vehicle based on a running noise;
an acquisition unit (10, 11) that acquires visibility information which indicates a visibility around the vehicle; and **characterized by**
a determination unit (21 A) that determines whether or not to cause the approaching vehicle detection unit (22) to operate based on the visibility information acquired by the acquisition unit (10).

2. The approaching vehicle detection device (1A) according to claim 1,
wherein the acquisition unit (10) acquires illumination information around the vehicle.

3. The approaching vehicle detection device (1A) according to claim 2,
wherein the determination unit (21A) determines whether or not to cause the approaching vehicle detection unit (22) to operate based on a comparison between the illumination information acquired by the acquisition unit (10, 11) and a predetermined threshold value of the illumination.

4. The approaching vehicle detection device (1A) according to claim 1,
wherein the acquisition unit (11) acquires weather information in addition to visibility information around the vehicle.

5. The approaching vehicle detection device (1A) according to claim 4,
wherein the determination unit (21A) determines whether or not to cause the approaching vehicle detection unit (22) to operate based on a comparison between the weather information acquired by the acquisition unit (11) and a predetermined weather condition.

6. The approaching vehicle detection device (1A) according to claim 1, further comprising:
a detection unit (10, 23, 24) that detects visibility information which indicates a visibility of the vehicle driver,
wherein the determination unit determines whether or not to cause the approaching vehicle detection unit to operate based on the visibility information detected by the detection unit (10, 23, 24), and the visibility information aquired by the acquisition unit (11).

7. The approaching vehicle detection device (1A) according to claim 6,
wherein the detection unit (23) detects the driver's line of sight information.

8. The approaching vehicle detection device (1A) according to claim 7,
wherein the determination unit (21 A) determines whether or not to cause the approaching vehicle detection unit (22) to operate based on a comparison between the line of sight information acquired by the detection unit (23) and a predetermined moving status of the line of sight, when the determination unit (21 A) determines not to cause the approaching vehicle detection unit (1A) to operate based on the visibility information acquired by the acquisition unit (11).

9. The approaching vehicle detection device (1A) according to claim 6,
wherein the detection unit (24) detects the driver's posture information.

10. The approaching vehicle detection device (1A) according to claim 9,
wherein the determination unit (21 A) determines whether or not to cause the approaching vehicle detection unit (22) to operate based on a comparison between the posture information acquired by the detection unit (24) and a predetermined frontward inclination status of the posture, when the determination unit (21A) determines not to cause the approaching vehicle detection unit (1A) to operate based on the visibility information acquired by the acquisition unit (11).

## Patentansprüche

1. In einem Fahrzeug eingebaute Vorrichtung (1A) zur Erkennung sich nähernder Fahrzeuge mit:
einer Einheit (22) zur Erkennung sich nähernder Fahrzeuge, die ein sich näherndes Fahrzeug basierend auf einem Fahrtgeräusch erfasst;
einer Aufnahmeeinheit (10, 11), die Sichtbedingungsinformation aufnimmt, die Sichtbedingungen um das Fahrzeug anzeigt; und **gekennzeichnet durch**
eine Bestimmungseinheit (21 A), die basierend auf der von der Aufnahmeeinheit (10) erfassten Sichtbedingungsinformation bestimmt, ob die Einheit (22) zur Erkennung sich nähernder Fahrzeuge dazu veranlasst wird oder nicht, den Betrieb aufzunehmen.

2. Die Vorrichtung (1A) zur Erkennung sich nähernder Fahrzeuge nach Anspruch 1,
wobei die Aufnahmeeinheit (10) Beleuchtungsinformation um das Fahrzeug aufnimmt.

3. Die Vorrichtung (1A) zur Erkennung sich nähernder Fahrzeuge nach Anspruch 2,
wobei die Bestimmungseinheit (21 A) auf der Grundlage eines Vergleichs zwischen der von der Aufnahmeeinheit (10, 11) aufgenommenen Beleuchtungsinformation und einem vorab bestimmten Schwellenwert der Beleuchtung bestimmt, ob die Einheit (22) zur Erkennung sich nähernder Fahrzeuge dazu veranlasst wird oder nicht, den Betrieb aufzunehmen.

4. Die Vorrichtung (1A) zur Erkennung sich nähernder Fahrzeuge nach Anspruch 1,
wobei die Aufnahmeeinheit (11) Wetterinformation zusätzlich zu Sichtbedingungsinformation um das Fahrzeug aufnimmt.

5. Die Vorrichtung (1A) zur Erkennung sich nähernder Fahrzeuge nach Anspruch 4,
wobei die Bestimmungseinheit (21 A) auf der Grundlage eines Vergleichs zwischen der von der Aufnahmeeinheit (11) aufgenommenen Wetterinformation und einem vorab festgelegten Wetterzustand bestimmt, ob die Einheit (22) zur Erkennung sich nähernder Fahrzeuge dazu veranlasst wird oder nicht, den Betrieb aufzunehmen.

6. Die Vorrichtung (1A) zur Erkennung sich nähernder Fahrzeuge nach Anspruch 1,
weiter mit:
einer Erfassungseinheit (10, 23, 24), die Sichtbedingungsinformation erfasst, die Sichtbedingungen für den Fahrzeugführer anzeigt,
wobei die Bestimmungseinheit auf der Grundlage der von der Erfassungseinheit (10, 23, 24) erfassten Sichtbedingungsinformation und der von der Aufnahmeeinheit (11) aufgenommenen Sichtbedingungsinformation bestimmt, ob die Einheit zur Erkennung sich nähernder Fahrzeuge dazu veranlasst wird oder nicht, den Betrieb aufzunehmen.

7. Die Vorrichtung (1A) zur Erkennung sich nähernder Fahrzeuge nach Anspruch 6,
wobei die Erfassungseinheit (23) die Information über die Sichtlinie des Fahrers erfasst.

8. Die Vorrichtung (1A) zur Erkennung sich nähernder Fahrzeuge nach Anspruch 7,
wobei die Bestimmungseinheit (21 A) auf der Grundlage eines Vergleichs zwischen der von der Erfassungseinheit (23) aufgenommenen Information über die Sichtlinie und einem vorab festgelegten Bewegungszustand der Sichtlinie bestimmt, ob die Einheit (22) zur Erkennung sich nähernder Fahrzeuge dazu veranlasst wird oder nicht, den Betrieb aufzunehmen, wenn die Bestimmungseinheit (21A) auf der Grundlage der von der Aufnahmeeinheit (11) aufgenommenen Sichtbedingungsinformation bestimmt, die Einheit (1A) zur Erkennung sich nähernder Fahrzeuge nicht dazu zu veranlassen, den Betrieb aufzunehmen.

9. Die im Fahrzeug eingebaute Vorrichtung (1A) zur Erkennung sich nähernder Fahrzeuge nach Anspruch 6,
wobei die Erfassungseinheit (24) die Information über die Haltung des Fahrers erfasst.

10. Die im Fahrzeug eingebaute Vorrichtung (1A) zur Erkennung sich nähernder Fahrzeuge nach Anspruch 9,
wobei die Bestimmungseinheit (21A) auf der Grundlage eines Vergleichs zwischen der von der Erfassungseinheit (24) aufgenommenen Information über die von der Erfassungseinheit (24) aufgenommenen Haltung des Fahrers und einem vorab festgelegten vorwärts geneigten Haltungszustand bestimmt, ob die Einheit (22) zur Erkennung sich nähernder Fahrzeuge in Betrieb genommen wird oder nicht, wenn die Bestimmungseinheit (21 A) auf der Grundlage der von der Aufnahmeeinheit (11) aufgenommenen Sichtbedingungsinformation bestimmt, die Einheit (1A) zur Erkennung sich nähernder Fahrzeuge nicht dazu zu veranlassen, den Betrieb aufzunehmen.

## Revendications

1. Dispositif de détection de véhicule s'approchant (1A), installé dans un véhicule, comprenant :
une unité de détection de véhicule s'approchant (22) qui détecte un véhicule s'approchant en se basant sur un bruit de fonctionnement ;
une unité d'acquisition (10, 11) qui acquière des informations de visibilité indiquant une visibilité autour du véhicule ; et **caractérisé par**
une unité de détermination (21A) qui détermine si le fonctionnement de l'unité de détection de véhicule s'approchant (22) doit être ou non déclenché en se basant sur les informations de visibilité acquises par l'unité d'acquisition (10).

2. Dispositif de détection de véhicule s'approchant (1A) selon la revendication 1,
dans lequel l'unité d'acquisition (10) acquiert des informations d'éclairage autour du véhicule.

3. Dispositif de détection de véhicule s'approchant (1A) selon la revendication 2,
dans lequel l'unité de détermination (21A) détermine si le fonctionnement de l'unité de détection de véhicule s'approchant (22) doit être ou non déclenché en se basant sur une comparaison entre les informations d'éclairage acquises par l'unité d'acquisition (10, 11) et une valeur seuil prédéterminée de l'éclairage.

4. Dispositif de détection de véhicule s'approchant (1A) selon la revendication 1,
dans lequel l'unité d'acquisition (11) acquiert des informations météorologiques en plus des informations de visibilité autour du véhicule.

5. Dispositif de détection de véhicule s'approchant (1A) selon la revendication 4,
dans lequel l'unité de détermination (21A) détermine si le fonctionnement de l'unité de détection de véhicule s'approchant (22) doit être ou non déclenché en se basant sur une comparaison entre les informations météorologiques acquises par l'unité d'acquisition (11) et une condition météorologique prédéterminée.

6. Dispositif de détection de véhicule s'approchant (1A) selon la revendication 1, comprenant en outre :
une unité de détection (10, 23, 24) qui détecte les informations de visibilité indiquant une visibilité du conducteur du véhicule,
l'unité de détermination déterminant si le fonctionnement de l'unité de détection de véhicule s'approchant doit être ou non déclenché en se basant sur les informations de visibilité détectées par l'unité de détection (10, 23, 24) et les informations de visibilité acquises par l'unité d'acquisition (11).

7. Dispositif de détection de véhicule s'approchant (1A) selon la revendication 6,
dans lequel l'unité de détection (23) détecte les informations de la ligne de mire du conducteur.

8. Dispositif de détection de véhicule s'approchant (1A) selon la revendication 7,
dans lequel l'unité de détermination (21A) détermine si le fonctionnement de l'unité de détection de véhicule s'approchant (22) doit être ou non déclenché en se basant sur une comparaison entre les informations de la ligne de mire acquises par l'unité de détection (23) et un statut de déplacement prédéterminé de la ligne de mire, lorsque l'unité de détermination (21A) détermine de ne pas déclencher le fonctionnement de l'unité de détection de véhicule s'approchant (1A) en se basant sur les informations de visibilité acquises par l'unité d'acquisition (11).

9. Dispositif de détection de véhicule s'approchant (1A) selon la revendication 6,
dans lequel l'unité de détection (24) détecte les informations de posture du conducteur.

10. Dispositif de détection de véhicule s'approchant (1A) selon la revendication 9,
dans lequel l'unité de détermination (21A) détermine si le fonctionnement de l'unité de détection de véhicule s'approchant (22) doit être ou non déclenché en se basant sur une comparaison entre les informations de posture acquises par l'unité de détection (24) et un statut prédéterminé d'inclinaison vers l'avant de la posture, lorsque l'unité de détermination (21A) détermine de ne pas déclencher le fonctionnement de l'unité de détection de véhicule s'approchant (1A) en se basant sur les informations de visibilité acquises par l'unité d'acquisition (11).
